# FASCICULE DE BREVET EUROPEEN

(11) **EP 2 143 312 B1**
(45) Date de publication et mention de la délivrance du brevet: **02.03.2011**
(21) Numéro de dépôt: 08788166.0
(22) Date de dépôt: 11.04.2008
(51) Int. Cl.: H05K 5/02, H05K 1/11, G06F 21/00

(54) **DISPOSITIF DE PROTECTION D'UN COMPOSANT ELECTRONIQUE**
VORRICHTUNG ZUM SCHUTZ EINER ELEKTRONISCHEN KOMPONENTE
DEVICE FOR THE PROTECTION OF AN ELECTRONIC COMPONENT

(30) Priorité: 12.04.2007 FR 0754414
(43) Date de publication de la demande: 13.01.2010
(73) Titulaire: Ingenico France, 92200 Neuilly Sur Seine (FR)
(72) Inventeur: BONNET, Eric, F-75015 Paris (FR); GARY, Didier, F-75015 Paris (FR); DEDIEU, Philippe, F-75015 Paris (FR)
(74) Mandataire: de Beaumont, Michel
(86) Numéro de dépôt international: PCT/FR2008/050647
(87) Numéro de publication internationale: WO 2008/145881

(56) Documents cités:
- GB-A- 2 195 478

## Description

### Domaine de l'invention

La présente invention concerne un dispositif de protection d'un composant électronique, par exemple un composant électronique fixé à un circuit imprimé, de façon à éviter que l'on ait accès audit composant électronique ou à des informations contenues dans ledit composant électronique.

### Exposé de l'art antérieur

Certains systèmes électroniques, par exemple un lecteur de carte à puce ou de carte magnétique, comprennent un circuit imprimé contenu dans un boîtier. Des composants électroniques peuvent être soudés sur les deux faces du circuit imprimé. Il s'agit par exemple d'un écran d'affichage, d'un connecteur pour liaison série, d'un connecteur destiné à être relié au réseau téléphonique, d'un connecteur de carte à mémoire, etc. On appelle face avant la face du circuit imprimé sur laquelle l'écran d'affichage est fixé et face arrière la face du circuit imprimé opposée à la face avant.

Les règles de sécurité édictées par les organismes d'agrément imposent généralement de prévoir des dispositifs de protection permettant d'empêcher l'accès à certains composants électroniques fixés au circuit imprimé. En particulier, pour certains composants électroniques fixés à la face arrière du circuit imprimé, les règles de sécurité peuvent imposer la présence de dispositifs de protection spécifiques pour ces composants. En effet, ces composants sont plus "sensibles" à des tentatives de fraude puisqu'un utilisateur qui manipule le système électronique fait généralement face à l'écran et peut ne pas s'apercevoir qu'une tentative de fraude a été réalisée en perçant le boîtier du côté de la face arrière du circuit imprimé. Le circuit imprimé peut intégrer une piste servant de treillis de protection. Ce treillis empêche l'accès aux composants de la face avant par sa position sur une des couches inférieures du circuit imprimé. Un dispositif de protection utilisé de façon classique correspond à un circuit souple (embouti ou déformé) enveloppant comportant une piste ayant la fonction de treillis de détection d'intrusion, appelé par la suite circuit souple de protection. Le circuit souple de protection est constitué de l'empilement de plusieurs films souples entre lesquels sont disposées des pistes conductrices connectées entre elles et formant au moins un circuit de sécurité. Le circuit souple de protection recouvre les composants électroniques à protéger et le circuit de sécurité est connecté à ses extrémités à un système de traitement, prévu au niveau du circuit imprimé. Le système de traitement est adapté à détecter la rupture d'une piste conductrice du circuit de sécurité, ce qui peut correspondre à une tentative d'intrusion. Toutefois, la protection fournie par un circuit souple de protection peut, dans certains cas, être insuffisante.

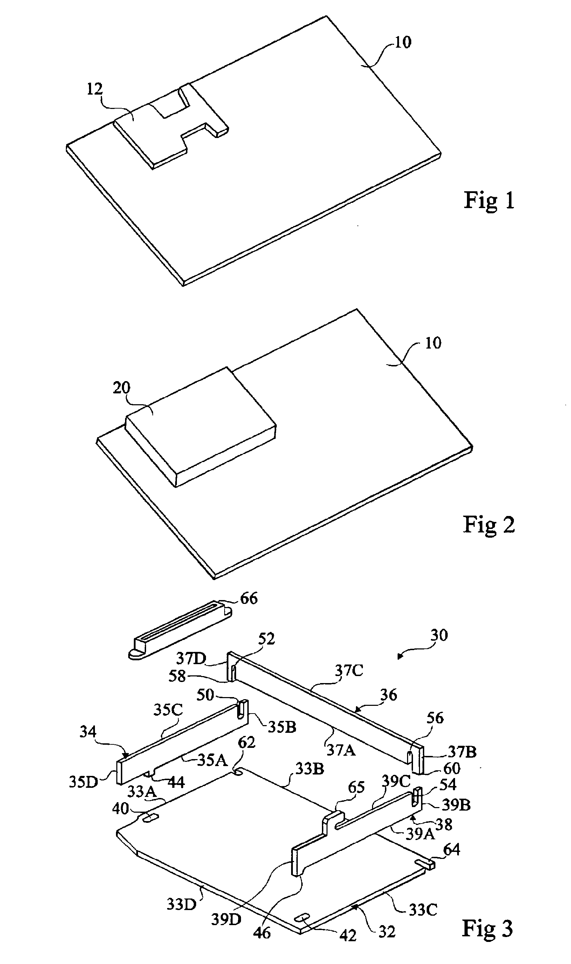

La figure 1 représente un exemple schématique d'un circuit imprimé 10 sur lequel est fixé un connecteur de carte à mémoire 12. Le connecteur de carte à mémoire 12 est disposé le long d'un bord du circuit imprimé 10. En effet, le connecteur 12 doit généralement être accessible depuis une ouverture prévue dans le boîtier contenant le circuit imprimé de façon à permettre l'introduction d'une carte à mémoire dans le connecteur et le retrait d'une carte à mémoire du connecteur. La protection fournie par un circuit souple de protection recouvrant le connecteur 12 peut être insuffisante. En effet, un individu pourrait soulever ou déformer le circuit souple de protection pour accéder au connecteur 12 sans interrompre une piste conductrice du circuit de sécurité du circuit souple de protection. Une telle intrusion ne serait alors pas détectée.

La figure 2 représente un exemple de dispositif de protection 20 utilisé de façon classique pour protéger le connecteur de carte à mémoire 12. Il s'agit d'une cage 20 rigide, fixée au circuit imprimé 10, qui recouvre le connecteur 12 tout en permettant un accès au connecteur 12 le long du bord du circuit imprimé 10. La cage 20 étant rigide et fixée au circuit imprimé 10, elle ne peut pas être déplacée ou déformée facilement. En outre, un circuit de sécurité en treillis est généralement prévu sur les faces internes de la cage 20 de façon à permettre la détection d'une tentative de perçage de la cage 20.

Un exemple de procédé classique de fabrication du dispositif de protection 20 consiste à emboutir une plaque mince correspondant à un film isolant, recouvert d'un matériau conducteur électrique (par exemple du cuivre) sur ses deux faces. Le circuit de sécurité en treillis est formé sur l'une des faces de la plaque mince emboutie.

La demande de brevet britannique 2 195 478 décrit un exemple particulier de dispositif de sécurité pour protéger des composants portés par une carte de circuit imprimé.

Il serait souhaitable de pouvoir simplifier davantage le procédé de fabrication d'un tel dispositif de protection.

### Résumé de l'invention

La présente invention vise un dispositif de protection d'un composant électronique, formant une cage rigide recouvrant le composant électronique et comprenant un circuit de sécurité, qui soit particulièrement simple à réaliser.

Selon un autre objet, le dispositif de protection peut être réalisé à coût réduit.

Pour atteindre tout ou partie de ces objets ainsi que d'autres, un aspect de la présente invention prévoit un dispositif de protection destiné à être fixé à un support et à recouvrir au moins partiellement au moins un composant électronique. Le dispositif de protection comprend au moins une première paroi correspondant à une première portion de circuit imprimé comportant au moins une première piste conductrice en surface, la première paroi comprenant au moins un premier élément de guidage mécanique ; au moins une deuxième paroi correspondant à une deuxième portion de circuit imprimé comportant au moins une deuxième piste conductrice en surface, la deuxième paroi comprenant au moins un deuxième élément de guidage mécanique qui coopère avec le premier élément de guidage mécanique ; et des points de soudure reliant la première paroi à la deuxième paroi, au moins l'un des points de soudure connectant, en outre, électriquement la première piste conductrice à la deuxième piste conductrice.

Selon un exemple de réalisation, le jeu entre la première paroi et la deuxième paroi est inférieur à 0,5 millimètre.

Selon un exemple de réalisation, la première et/ou la deuxième portion de circuit imprimé correspond à un empilement d'au moins deux couches isolantes et rigides, des pistes conductrices étant disposées sur une face de l'empilement et des pistes conductrices supplémentaires étant disposées entre les couches.

Selon un exemple de réalisation, la deuxième paroi comprend, en outre, un troisième élément de guidage mécanique et la première paroi comprend, en outre, des quatrième et cinquième éléments de guidage mécanique. Le dispositif comprend en outre une troisième paroi correspondant à une troisième portion de circuit imprimé comportant au moins une troisième piste conductrice en surface, la troisième paroi comprenant au moins un sixième élément de guidage mécanique, qui coopère avec le troisième élément de guidage mécanique, un septième élément de guidage mécanique qui coopère avec le quatrième élément de guidage mécanique et un huitième élément de guidage mécanique. Le dispositif comprend, en outre, une quatrième paroi correspondant à une quatrième portion de circuit imprimé comportant au moins une quatrième piste conductrice en surface, la quatrième paroi comprenant au moins un neuvième élément de guidage mécanique qui coopère avec le huitième élément de guidage mécanique, et un dixième élément de guidage mécanique qui coopère avec le cinquième élément de guidage mécanique ; et des points de soudure supplémentaires reliant la première paroi à la troisième paroi et à la quatrième paroi.

Selon un exemple de réalisation, au moins l'un des points de soudure supplémentaires relie électriquement la troisième portion de circuit imprimé à la première portion de circuit imprimé et la quatrième portion de circuit imprimé à la première portion de circuit imprimé.

Selon un exemple de réalisation, tous les points de soudure assurant une connexion électrique sont destinés à être en vis-à-vis du composant électronique.

Selon un exemple de réalisation, tous les points de soudure qui sont destinés à être accessibles depuis l'extérieur du dispositif de protection lorsque le dispositif de protection recouvre le composant électronique assurent seulement une liaison mécanique entre la première paroi et la deuxième paroi, entre la première paroi et la troisième paroi et entre la première paroi et la quatrième paroi.

Il est également prévu un circuit électronique comprenant un circuit imprimé ; au moins un composant électronique fixé au circuit imprimé ; et au moins un dispositif de protection du composant électronique tel que défini précédemment.

Selon un exemple de réalisation, la deuxième paroi comprend au moins un élément en saillie, le circuit imprimé comprenant une ouverture recevant au moins partiellement l'élément en saillie.

Il est également prévu un procédé de fabrication d'un dispositif de protection destiné à être fixé à un support et à couvrir au moins partiellement au moins un composant électronique. Le procédé comprend les étapes consistant à prévoir au moins une première paroi correspondant à une première portion de circuit imprimé comportant au moins une première piste conductrice en surface, la première paroi comprenant au moins un premier élément de guidage mécanique, et au moins une deuxième paroi correspondant à une deuxième portion de circuit imprimé comportant au moins une deuxième piste conductrice en surface, la deuxième paroi comprenant au moins un deuxième élément de guidage mécanique ; à relier la première paroi à la deuxième paroi en faisant coopérer le premier élément de guidage mécanique avec le deuxième élément de guidage mécanique ; et à former des points de soudure reliant la première paroi à la deuxième paroi, au moins l'un des points de soudure connectant, en outre, électriquement la première piste conductrice à la seconde piste conductrice.

### Brève description des dessins

Ces objets, caractéristiques et avantages, ainsi que d'autres de la présente invention seront exposés en détail dans la description suivante d'exemples de réalisation particuliers faite à titre non-limitatif en relation avec les figures jointes parmi lesquelles :
la figure 1, précédemment décrite, représente un exemple schématique de composant électronique fixé à un circuit imprimé ;
la figure 2, précédemment décrite, représente de façon schématique, un exemple classique d'un dispositif de protection du composant électronique de la figure 1 ;
les figures 3 et 4 sont respectivement une vue éclatée et une vue en perspective d'un exemple de réalisation d'un dispositif de protection selon l'invention ;
les figures 5 et 6 sont respectivement une coupe schématique et une vue de détail du dispositif de protection de la figure 4 ;
la figure 7 représente le dispositif de protection de la figure 4 une fois fixé à un circuit imprimé ; et
les figures 8 et 9 sont des vues en perspective d'autres exemples de réalisation du dispositif de protection selon l'invention.

### Description détaillée

Par souci de clarté, de mêmes éléments ont été désignés par de mêmes références aux différentes figures.

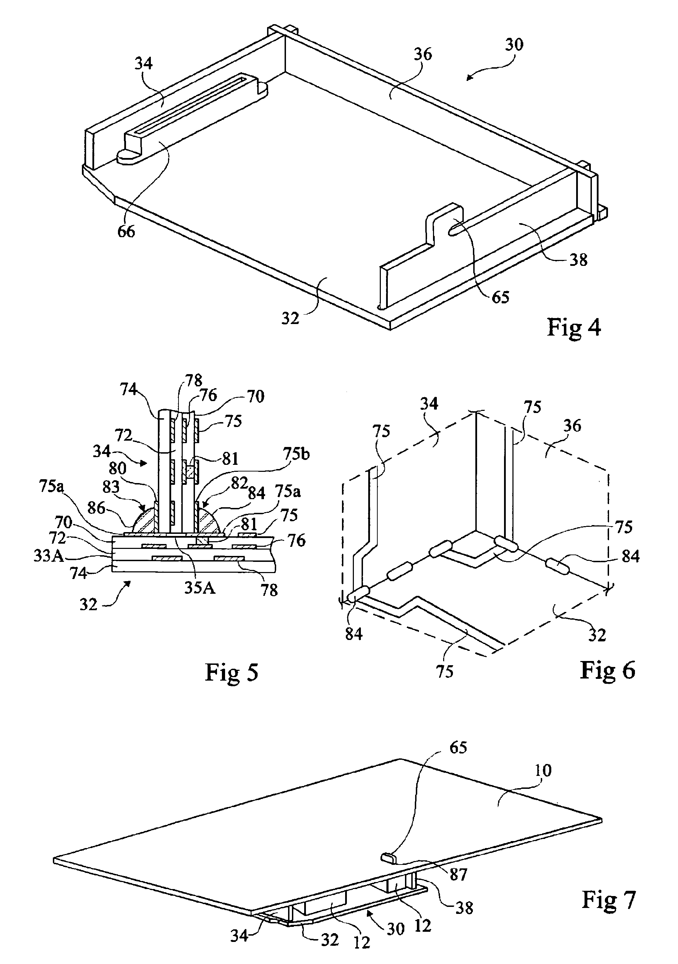

Les figures 3 et 4 sont respectivement une vue éclatée et une vue en perspective d'un exemple de réalisation d'un dispositif de protection 30 selon l'invention. Le dispositif de protection 30 correspond à une cage comprenant :
une plaque de fond 32, plane et de forme générale rectangulaire, comprenant quatre bords 33A, 33B, 33C et 33D, parallèles deux à deux, les bords 33A et 33D étant toutefois légèrement biseautés à une extrémité, par exemple, pour s'adapter à des contraintes d'encombrement ;
une première plaque latérale 34, plane et de forme générale rectangulaire, comprenant quatre bords 35A, 35B, 35C et 35D, parallèles deux à deux, le bord 35A étant au contact de la plaque 32 ;
une deuxième plaque latérale 36, plane et de forme générale rectangulaire, adjacente à la plaque 34, comprenant quatre bords 37A, 37B, 37C et 37D, parallèles deux à deux, le bord 37A étant au contact de la plaque 32 ; et
une troisième plaque latérale 38, plane et de forme générale rectangulaire, adjacente à la plaque 36, comprenant quatre bords 39A, 39B, 39C et 39D, parallèles deux à deux, le bord 39A étant au contact de la plaque 32.

Les plaques 32, 34, 36, 38 correspondent à des portions découpées d'un circuit imprimé constitué d'un empilement de couches époxy au niveau duquel sont prévues des pistes conductrices.

La plaque de fond 32 comprend deux trous oblongs 40, 42 qui s'étendent chacun le long de l'un des bords parallèles 33A, 33C à proximité du bord 33D. Le trou 40 reçoit un pion 44 qui se projette depuis le bord 35A de la plaque latérale 34 et le trou 42 reçoit un pion 46 qui se projette depuis le bord 39A de la plaque latérale 38. La plaque latérale 34 comprend une encoche 50 qui s'étend le long du bord 35B et débouche sur le bord 35C. L'encoche 50 coopère avec une encoche 52 de forme complémentaire prévue au niveau de la plaque latérale 36, qui s'étend le long du bord 37D et qui débouche sur le bord 37A. De façon analogue, la plaque latérale 38 comprend une encoche 54 qui s'étend le long du bord 39B et débouche sur le bord 39C. L'encoche 54 coopère avec une encoche 56 de forme complémentaire prévue au niveau de la plaque latérale 36, qui s'étend le long du bord 37B et qui débouche sur le bord 37A.

La plaque latérale 36 comprend deux pions 58, 60 qui se projettent depuis le bord 37A au niveau des bords 37D et 37B coopérant chacun avec une encoche 62, 64 prévue sur la plaque de fond 32, les encoches 62, 64 s'étendant le long du bord 33B et débouchant respectivement sur les bords 33A et 33C. La plaque 38 comprend une protubérance 65, en forme de crochet, qui se projette depuis le bord 39C. Le dispositif de protection 30 comprend en outre un connecteur 66 fixé à la plaque de fond 32.

Le montage du dispositif de protection 30 peut être réalisé en reliant les plaques 34, 36, 38 les unes aux autres en faisant coopérer l'encoche 50 de la plaque 34 avec l'encoche 52 de la plaque 36 et en faisant coopérer l'encoche 54 de la plaque 38 avec l'encoche 56 de la plaque 36. L'ensemble constitué des trois plaques 34, 36, 38 est alors placé sur la plaque de fond 32 en introduisant le pion 44 de la plaque 34 dans le trou 40 de la plaque de fond 32, en introduisant le pion 46 de la plaque 38 dans le trou 42 de la plaque de fond 32 et en introduisant les pions 58, 60 de la plaque 36 dans les encoches 62, 64 de la plaque de fond 32. La coopération des pions 44, 46, 58, 60 et des trous 40, 42 et encoches 62, 64 correspondants et des encoches 50, 52, 54, 56 entre elles permet d'obtenir un alignement automatique des plaques 32, 34, 36, 38 les unes par rapport aux autres avec des jeux pouvant être inférieurs à 0,5 mm, de préférence inférieurs à 0,2 mm. Les plaques 32, 34, 36, 38 sont alors soudées les unes aux autres, par exemple, selon un procédé de soudage par refusion. Un tel procédé consiste à disposer sur la plaque 32 seulement des portions de pâte à braser au niveau des jonctions entre les plaques 32, 34, 36, 38. La pâte à braser correspond par exemple à un mélange à base d'étain principalement qui a une consistance visqueuse. A titre d'exemple, chaque portion de pâte à braser a une épaisseur de plusieurs centaines de micromètres. Le dispositif de protection 30 est alors chauffé dans un four de refusion pour amener les portions de pâte à braser en phase liquide. Lors de l'étape suivante de refroidissement, on obtient une solidification des portions de pâte à braser qui forment des soudures. Le connecteur 66 peut également être soudé à la plaque de fond 32 au cours de l'opération de soudage par refusion.

La figure 5 est une coupe schématique des plaques 32 et 34 au niveau de la liaison entre ces plaques. La figure 5 n'est pas tracée à l'échelle. A titre d'exemple, chaque plaque 32, 34 correspond à une portion de circuit imprimé comprenant un empilement de trois couches isolantes 70, 72, 74, par exemple des couches epoxy, ayant chacune une épaisseur de 150 µm. Des pistes conductrices 75, 76, 78, par exemple en cuivre, sont disposées à la surface respectivement des couches 70, 72, 74. Comme cela est décrit par la suite, certaines des pistes 75 sont utilisées comme point d'accrochage pour la réalisation de points de soudure. Les pistes 75 de la plaque 32 utilisées comme point d'accrochage pour la réalisation de points de soudure sont désignées par la référence 75a et les pistes 75 de la plaque 34 utilisées comme point d'accrochage pour la réalisation de points de soudure sont désignées par la référence 75b. En outre, pour les plaques 34, 36, 38, on prévoit également des pistes conductrices 80, par exemple en cuivre, à la surface de la couche isolante 74 du côté opposé aux pistes conductrices 78.

Des vias 81, formés dans la couche 70, peuvent relier chacun l'une des pistes 75 à l'une des pistes 76. La plaque 34 est posée le long du bord 35A contre la plaque 32 et définit avec la plaque 32 deux régions de jonction 82, 83 de part et d'autre de la plaque 34. Un point de soudure 84, prévu au niveau de la région de jonction 82, relie électriquement une piste 75a de la plaque 32 à une piste 75b de la plaque 34. Un autre point de soudure 86, prévu au niveau de la région de jonction 83, relie électriquement une piste 75a de la plaque 32 à une piste 80 de la plaque 34 et assure uniquement une fonction de liaison mécanique entre les plaques 32 et 34.

La position des pistes conductrices 75a, 75b et 80 servant de point d'accrochage pour les points de soudure 84, 86 est un paramètre important pour le bon déroulement du procédé de soudage par refusion. En effet, les pistes 75a de la plaque 32 doivent être voisines des pistes 75b et 80 des plaques 34, 36, 38. Pour ce faire, les pistes 75b et 80 des plaques 34, 36, 38 sont situées en bout de plaque et les pistes 75a de la plaque 32 s'étendent en partie sous les bords des plaques 34, 36, 38.

La figure 6 est une vue schématique au niveau de la jonction entre les plaques 32, 34 et 36. Les points de soudure 84 sont répartis le long des régions de contact entre chaque paire de plaques adjacentes. Les points de soudure 84 qui assurent une connexion électrique entre les pistes 75 de deux plaques adjacentes sont disposés à l'intérieur du dispositif de protection 30, c'est-à-dire qu'ils sont en vis-à-vis du composant à protéger une fois que le dispositif de protection 30 est fixé au circuit imprimé. Certains des points de soudure 84 peuvent assurer seulement une liaison mécanique. Les points de soudure 86 qui assurent seulement une liaison mécanique entre deux plaques adjacentes sont, quant à eux, prévus à l'extérieur du dispositif de protection 30, c'est-à-dire qu'ils sont visibles depuis l'extérieur une fois que le dispositif de protection 30 est fixé au circuit imprimé. Ceci donne à l'assemblage une robustesse mécanique supérieure à celle qu'il aurait eu avec les seuls points de soudure 84 situés à l'intérieur.

Les pistes conductrices 75, 76, 78 des plaques 32, 34, 36, 38, connectées entre elles notamment par les vias 81 et les points de soudure 84, forment au moins un circuit de sécurité de type treillis. Les extrémités du circuit de sécurité aboutissent au niveau du connecteur 66.

La figure 7 représente le dispositif de protection 30 une fois monté sur un circuit imprimé 10. Le montage du dispositif de protection 30 sur le circuit imprimé 10 est réalisé en introduisant le crochet 65 dans une ouverture 87 prévue au niveau du circuit imprimé 10. Ceci permet d'assurer un positionnement correct du dispositif de protection 30 par rapport au circuit imprimé 10. Le dispositif de protection 30 est alors soudé manuellement au circuit imprimé 10 par des points de soudure répartis à la périphérie du dispositif 30.

De façon générale, le dispositif de protection 30 peut être relié électriquement au circuit imprimé 10 par l'intermédiaire du connecteur 66 ou par l'intermédiaire des soudures réalisées lorsque le dispositif de protection 30 est positionné sur le circuit imprimé 10. Dans le second cas, parmi les soudures reliant le dispositif de protection 30 au circuit imprimé 10, certaines soudures relient électriquement le circuit de sécurité du dispositif de protection 30 à celui du circuit imprimé 10 et d'autres soudures assurent un maintien mécanique du dispositif de protection 30.

Plus précisément, dans le présent exemple de réalisation, la connexion électrique entre le circuit de sécurité du dispositif de protection 30 et un système de traitement prévu au niveau du circuit imprimé 10 est obtenue en prévoyant une fiche de connexion, non visible en figure 7, au niveau du circuit imprimé 10 adaptée à coopérer avec le connecteur 66 lorsque le dispositif 30 est fixé au circuit imprimé 10. Une tentative de retrait ou de dégradation du dispositif 30 se traduit alors par une rupture d'une piste conductrice du circuit de sécurité, ce qui est détecté par le système de traitement. Le circuit de sécurité peut également s'étendre jusqu'au crochet 65 pour pouvoir détecter une éventuelle rupture de celui-ci.

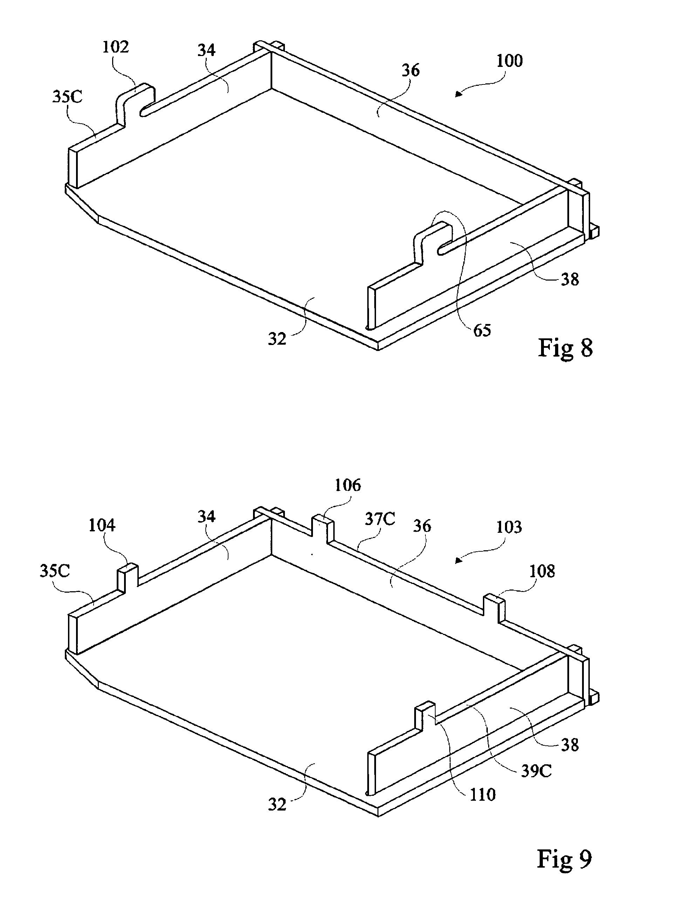

La figure 8 représente un autre exemple de réalisation du dispositif de protection 100 selon l'invention. Par rapport au dispositif de protection 30, le dispositif de protection 100 comprend, en plus du crochet 65, un crochet supplémentaire 102 qui se projette depuis le bord 35C de la plaque 34. Le crochet supplémentaire 102 est, par exemple, disposé de façon symétrique par rapport au crochet 65. Le connecteur 66 peut alors ne pas être présent. La connexion électrique entre le circuit de sécurité du dispositif 100 et le circuit imprimé 10 peut alors être obtenue par des points de soudure reliant les extrémités des crochets 65, 102 au circuit imprimé 10. De tels points de soudure peuvent être réalisés au niveau de la face du circuit imprimé 10 qui est opposée au dispositif de protection 100. Ceci permet de rendre encore plus difficile une tentative de neutralisation du dispositif de protection 100.

La figure 9 représente un autre exemple de réalisation du dispositif 103 selon l'invention. Par rapport au dispositif de protection 30, à la place du crochet 65, on prévoit quatre pions 104, 106, 108, 110, un pion 104 qui se projette depuis le bord 35C de la plaque 34, deux pions 106, 108 qui se projettent depuis le bord 37C de la plaque 36 et un pion 110 qui se projette depuis le bord 39C de la plaque 38. Le circuit de sécurité s'étend au moins jusqu'à l'extrémité de deux des pions 104, 106, 108, 110. Le montage du dispositif de protection 103 est obtenu en introduisant les pions 104, 106, 108, 110 dans des trous prévus au niveau du circuit imprimé 10. Une fois le dispositif de sécurité mis en place, au moins deux des pions 104, 106, 108, 110 se projettent en saillie depuis la face du circuit imprimé 10 opposée au dispositif de protection 103. La connexion électrique entre le circuit de sécurité du dispositif 103 et le circuit imprimé 10 peut alors être obtenue par des points de soudure reliant le circuit imprimé aux portions des pions en saillie au niveau de la face du circuit imprimé qui est opposée au dispositif de protection 103. Ceci permet de rendre encore plus difficile une tentative de neutralisation du dispositif de protection 103.

Bien entendu, la présente invention est susceptible de diverses variantes et modifications qui apparaîtront à l'homme de l'art. En particulier, bien que, dans les exemples de réalisation décrits précédemment, le dispositif de protection soit constitué de quatre plaques, il est clair que le dispositif de protection peut être constitué d'un nombre de plaques différent. En outre, seules certaines des plaques constituant le dispositif de protection peuvent correspondre à des portions de circuit imprimé, les autres plaques étant alors constituée d'un matériau rigide et isolant.

## Revendications

1. Dispositif de protection (30 ; 100 ; 103) de composants électroniques destiné à être fixé à un support (10) et à recouvrir au moins partiellement au moins un composant électronique (12), ce dispositif comprenant au moins une première paroi (32) correspondant à une première portion de circuit imprimé comportant au moins une première piste conductrice (75, 75a) en surface, et au moins une deuxième paroi (34, 36, 38) correspondant à une deuxième portion de circuit imprimé comportant au moins une deuxième piste conductrice (75, 75b, 80) en surface, **caractérisé en ce que** :
la première paroi comprend au moins un premier élément de guidage mécanique (40, 42, 62, 64) ;
la deuxième paroi comprend au moins un deuxième élément de guidage mécanique (44, 46, 58, 60) qui coopère avec le premier élément de guidage mécanique ; et
des points de soudure (84, 86) reliant la première paroi à la deuxième paroi, au moins l'un des points de soudure (84) connectent, en outre, électriquement la première piste conductrice à la deuxième piste conductrice.

2. Dispositif de protection selon la revendication 1, dans lequel le jeu entre la première paroi (32) et la deuxième paroi (34, 36, 38) est inférieur à 0,5 millimètre.

3. Dispositif de protection selon la revendication 1 ou 2, dans lequel la première et/ou la deuxième portion de circuit imprimé correspond à un empilement d'au moins deux couches (70, 72, 74) isolantes et rigides, des pistes conductrices (75, 75a, 75b) étant disposées sur une face de l'empilement et des pistes conductrices (76, 78) supplémentaires étant disposées entre les couches.

4. Dispositif de protection selon l'une quelconque des revendications précédentes, dans lequel la deuxième paroi (34) comprend, en outre, un troisième élément de guidage mécanique (50) et la première paroi (32) comprend, en outre, des quatrième et cinquième éléments de guidage mécanique (42, 62, 64), le dispositif comprenant en outre :
une troisième paroi (36) correspondant à une troisième portion de circuit imprimé comportant au moins une troisième piste conductrice (75, 75b) en surface, la troisième paroi comprenant au moins un sixième élément de guidage mécanique (52), qui coopère avec le troisième élément de guidage mécanique (50), un septième élément de guidage mécanique (58, 60) qui coopère avec le quatrième élément de guidage mécanique (62, 64) et un huitième élément de guidage mécanique (56) ;
une quatrième paroi (38) correspondant à une quatrième portion de circuit imprimé comportant au moins une quatrième piste conductrice (75, 75b) en surface, la quatrième paroi comprenant au moins un neuvième élément de guidage mécanique (54) qui coopère avec le huitième élément de guidage mécanique (56), et un dixième élément de guidage mécanique (46) qui coopère avec le cinquième élément de guidage mécanique (42) ; et
des points de soudure supplémentaires (84, 86) reliant la première paroi à la troisième paroi et à la quatrième paroi.

5. Dispositif de protection selon la revendication 4, dans lequel au moins l'un des points de soudure supplémentaires (84) relie électriquement la troisième portion de circuit imprimé à la première portion de circuit imprimé et la quatrième portion de circuit imprimé à la première portion de circuit imprimé.

6. Dispositif de protection selon la revendication 5, dans lequel tous les points de soudure (84) assurant une connexion électrique sont destinés à être en vis-à-vis du composant électronique (12).

7. Dispositif de protection selon la revendication 5, dans lequel tous les points de soudure (86) qui sont destinés à être accessibles depuis l'extérieur du dispositif de protection (30 ; 100 ; 103) lorsque le dispositif de protection recouvre le composant électronique (12) assurent seulement une liaison mécanique entre la première paroi (32) et la deuxième paroi (34), entre la première paroi et la troisième paroi (36) et entre la première paroi et la quatrième paroi (38).

8. Circuit électronique comprenant :
un circuit imprimé (10) ;
au moins un composant électronique (12) fixé au circuit imprimé ; et
au moins un dispositif de protection (30 ; 100 ; 103) du composant électronique selon l'une quelconque des revendications précédentes.

9. Circuit électronique selon la revendication 8, dans lequel la deuxième paroi (34, 38) comprend au moins un élément en saillie (65, 102 ; 104), le circuit imprimé comprenant une ouverture (87) recevant au moins partiellement l'élément en saillie.

10. Procédé de fabrication d'un dispositif de protection (30 ; 100 ; 103) de composants électroniques destiné à être fixé à un support (10) et à couvrir au moins partiellement au moins un composant électrique (12), au moins une première paroi (32) correspondant à une première portion de circuit imprimé comportant au moins une première piste conductrice (75, 75a) en surface, et au moins une deuxième paroi (34, 36, 38) correspondant à une deuxième portion de circuit imprimé comportant au moins une deuxième piste conductrice (75, 75b, 80) en surface, **caractérisé en ce qu'**il comprend les étapes suivante :
prévoir que la première paroi comprend au moins un premier élément de guidage mécanique (40, 42, 62, 64), et que la deuxième paroi comprend au moins un deuxième élément de guidage mécanique (44, 46, 58, 60) ;
relier la première paroi à la deuxième paroi en faisant coopérer le premier élément de guidage mécanique avec le deuxième élément de guidage mécanique ; et
former des points de soudure (84, 86) reliant la première paroi à la deuxième paroi, au moins l'un des points de soudure (84) connectant, en outre, électriquement la première piste conductrice à la deuxième piste conductrice.

## Claims

1. A protection device (30; 100; 103) for electronic components intended to be attached to a support (10) and to at least partially cover at least one electronic component (12), this device comprising at least a first wall (32) corresponding to a first printed circuit portion comprising at least one first conductive track (75, 75a) at its surface, and at least a second wall (34, 36, 38) corresponding to a second printed circuit portion comprising at least one second conductive track (75, 75b, 80) at its surface, **characterized in that**
the first wall comprises at least a first mechanical guide element (40, 42, 62, 64);
the second wall comprises at least a second mechanical guide element (44, 46, 58, 60) which cooperates with the first mechanical guide element; and
weld spots (84, 86) connecting the first wall to the second wall, at least one of the weld spots (84) further electrically connects the first conductive track to the second conductive track.

2. The protection device of claim 1, wherein the clearance between the first wall (32) and the second wall (34, 36, 38) is smaller than 0.5 millimeter.

3. The protection device of claim 1 or 2, wherein the first and/or the second printed circuit portion corresponds to a stacking of at least two rigid insulating layers (70, 72, 74), conductive tracks (75, 75a, 75b) being arranged on a surface of the stacking and additional conductive tracks (76, 78) being arranged between the layers.

4. The protection device of any of the foregoing claims, wherein the second wall (34) further comprises a third mechanical guide element (50) and the first wall (32) further comprises fourth and fifth mechanical guide elements (42, 62, 64), the device further comprising:
a third wall (36) corresponding to a third printed circuit portion comprising at least one third conductive track (75, 75b) at its surface, the third wall comprising at least a sixth mechanical guide element (52), which cooperates with the third mechanical guide element (50), a seventh mechanical guide element (58, 60) which cooperates with the fourth mechanical guide element (62, 64), and an eighth mechanical guide element (56) ;
a fourth wall (38) corresponding to a fourth printed circuit portion comprising at least one fourth conductive track (75, 75b) at its surface, the fourth wall comprising at least a ninth mechanical guide element (54) which cooperates with the eighth mechanical guide element (56), and a tenth mechanical guide element (46) which cooperates with the fifth mechanical guide element (42); and
additional welding portions (84, 86) connecting the first wall to the third wall and to the fourth wall.

5. The protection device of claim 4, wherein at least one of the additional weld spots (84) electrically connects the third printed circuit portion to the first printed circuit portion and the fourth printed circuit portion to the first printed circuit portion.

6. The protection device of claim 5, wherein all the weld spots (84) ensuring an electric connection are intended to face the electronic component (12).

7. The protection device of claim 5, wherein all the weld spots (86) which are intended to be accessible from the outside of the protection device (30; 100; 103) when the protection devices covers the electronic component (12) only ensure a mechanical connection between the first wall (32) and the second wall (34), between the first wall and the third wall (36), and between the first wall and the fourth wall (38).

8. An electronic circuit comprising:
a printed circuit (10);
at least one electronic component (12) attached to the printed circuit; and
at least one electronic component protection device (30; 100; 103) of any of the foregoing claims.

9. The electronic circuit of claim 8, wherein the second wall (34, 38) comprises at least one protruding element (65, 102; 104), the printed circuit comprising an opening (87) at least partially receiving the protruding element.

10. A method for manufacturing a protection device (30; 100; 103) for electronic components intended to be attached to a support (10) and to at least partially cover at least one electronic component (12), at least a first wall (32) corresponding to a first printed circuit portion comprising at least one first conductive track (75, 75a) at its surface, and at least a second wall (34, 36, 38) corresponding to a second printed circuit portion comprising at least one second conductive track (75, 75b, 80) at its surface, **characterized in that** it comprises the steps of:
providing that the first wall comprises at least a first mechanical guide element (40, 42, 62, 64), and that the second wall comprises at least a second mechanical guide element (44, 46, 58, 60);
connecting the first wall to the second wall by having the first mechanical guide element cooperate with the second mechanical guide element; and
forming weld spots (84, 86) connecting the first wall to the second wall, at least one of the weld spots (84) further electrically connecting the first conductive track to the second conductive track.

## Patentansprüche

1. Eine Schutzvorrichtung (30; 100; 103) für elektronische Komponenten, die an einem Träger (10) zu befestigen sind und um mindestens teilweise mindestens eine elektronische Komponente (12) abzudecken, wobei die Vorrichtung Folgendes aufweist: mindestens eine erste Wand (32) entsprechend einem ersten gedruckten Schaltungsteil, der mindestens eine erste Leiterbahn (75, 75a) an seiner Oberfläche aufweist, und mindestens mit einer zweiten Wand (34, 36, 38) entsprechend einem zweiten gedruckten Schaltungsteil, der mindestens eine zweite Leiterbahn (75, 75b, 80) an seiner Oberfläche aufweist, **dadurch gekennzeichnet, dass** die erste Wand mindestens ein erstes mechanisches Führungselement (40, 42, 62, 64) aufweist;
die zweite Wand mindestens ein zweites mechanisches Führungselement (44, 46, 58, 60) aufweist, welches mit dem ersten mechanischen Führungselement zusammenarbeitet; und
Schweißpunkte (84, 86), die die erste Wand mit der zweiten Wand verbinden, wobei mindestens einer der Schweißpunkte (84) ferner elektrisch die Verbindung herstellt von der ersten leitenden Bahn zu der zweiten leitenden Bahn.

2. Die Schutzvorrichtung nach Anspruch 1, wobei der Abstand zwischen der ersten Wand (32) und der zweiten Wand (34, 36, 38) kleiner als 0,5 mm ist.

3. Die Schutzvorrichtung nach Anspruch 1 oder 2, wobei der erste und/oder der zweite gedruckte Schaltungsteil einen Stapel von mindestens zwei starren Isolierschichten (70, 72, 74) entspricht, wobei Leiterbahnen (75, 75a, 75b) auf einer Oberfläche des Stapels angeordnet sind und zusätzliche Leiterbahnen (76, 78) zwischen den Schichten angeordnet sind.

4. Die Schutzvorrichtung nach einem der vorhergehenden Ansprüche, wobei die zweite Wand (34) ferner ein drittes mechanisches Führungselement (50) aufweist, und wobei die erste Wand (32) ferner vierte und fünfte mechanische Führungselemente (42, 62, 64) aufweist, wobei die Vorrichtung ferner Folgendes aufweist:
eine dritte Wand (36), entsprechend einem dritten gedruckten Schaltungsteil, der mindestens eine dritte Leiterbahn (75, 75b) an seiner Oberfläche aufweist, wobei die dritte Wand mindestens ein sechstes mechanisches Führungselement (52) aufweist, welches mit dem dritten mechanischen Führungselement (50) zusammenarbeitet, ein siebtes mechanisches Führungselement (58, 60), welches mit dem vierten mechanischen Führungselement (62, 64) zusammenarbeitet und ein achtes mechanisches Führungselement (56);
eine vierte Wand (38), die einem vierten gedruckten Schaltungsteil entspricht und zwar mit mindestens einer vierten Leiterbahn (75, 75b) an der Oberfläche und wobei die vierte Wand mindestens ein neuntes mechanisches Führungselement (54) aufweist, welches mit dem achten mechanischen Führungselement (56) zusammenarbeitet und ferner mit einem zehnten mechanischen Führungselement (46), welches mit dem fünften mechanischen Führungselement (42) zusammenarbeitet; und
zusätzliche Schweißteile (84, 86), die die erste und die dritte Wand mit der vierten Wand verbinden.

5. Die Schutzvorrichtung nach Anspruch 4, wobei mindestens einer der zusätzlichen Schweißpunkte (84) den dritten gedruckten Schaltungsteil mit dem ersten gedruckten Schaltungsteil und den vierten gedruckten Schaltungsteil mit dem ersten gedruckten Schaltungsteil verbindet.

6. Die Schutzvorrichtung nach Anspruch 5, wobei sämtliche Schweißpunkte (84) eine elektrische Verbindung sicherstellen und zu der elektronischen Komponente (12) hinweisen.

7. Die Schutzvorrichtung nach Anspruch 5, wobei sämtliche Schweißpunkte (86), die von außerhalb der Schutzvorrichtung (30; 100; 103) zugänglich sein sollen, wenn die Schutzvorrichtungen die elektronische Komponente (12) abdecken, nur eine mechanische Verbindung zwischen der ersten Wand (32) und der zweiten Wand (34), zwischen der ersten Wand und der dritten Wand (36) und zwischen der ersten Wand und der vierten Wand (38) sicherstellen.

8. Eine elektronische Schaltung, die Folgendes aufweist:
eine gedruckte Schaltung (10);
mindestens eine elektronische Komponente (12), angebracht an der gedruckten Schaltung; und
mindestens eine elektronische Komponenten-Schutzvorrichtung (30; 100; 103) nach irgendeinem der vorhergehenden Ansprüche.

9. Die elektronische Schaltung nach Anspruch 8, wobei die zweite Wand (34, 38) mindestens ein vorstehendes Element (65, 102; 104) aufweist, wobei die gedruckte Schaltung eine Öffnung (87) besitzt, die mindestens partiell das vorstehende Element aufnimmt.

10. Ein Verfahren zur Herstellung einer Schutzvorrichtung (30; 100; 103) für elektronische Komponenten zur Anbringung an einen Träger (10) und zur mindestens teilweisen Abdeckung von mindestens einer elektronischen Komponente (12), wobei mindestens eine erste Wand (32) vorgesehen ist, entsprechend einem ersten gedruckten Schaltungsteil, der mindestens eine erste Leiterbahn (75, 75a) an seiner Oberfläche aufweist und mit mindestens einer zweiten Wand (34, 36, 38) entsprechend einem zweiten gedruckten Schaltungsteil, der mindestens eine zweite Leiterbahn (75, 75b, 80) an seiner Oberfläche aufweist, **dadurch gekennzeichnet, dass** die folgenden Schritte vorgesehen sind:
Vorsehen, dass die erste Wand mindestens ein erstes mechanisches Führungselement (40, 42, 62, 64) aufweist, und dass die zweite Wand mindestens ein zweites mechanisches Führungselement (44, 46, 58, 60) aufweist;
Verbinden der ersten Wand mit der zweiten Wand **dadurch**, dass ein erstes mechanisches Führungselement vorgesehen ist, welches mit dem zweiten mechanischen Führungselement zusammenarbeitet; und
Ausbildung von Schweißpunkten (84, 86) zur Verbindung der ersten Wand mit der zweiten Wand, wobei mindestens einer der Schweißpunkte (84) ferner die erste Leiterbahn mit der zweiten Leiterbahn elektrisch verbindet.
